# FASCICULE DE BREVET EUROPEEN

(11) **EP 1 448 882 B1**
(45) Date de publication et mention de la délivrance du brevet: **19.10.2005**
(21) Numéro de dépôt: 02796878.3
(22) Date de dépôt: 27.11.2002
(51) Int. Cl.: F02D 41/40, B01D 53/94, F01N 3/023, F01N 3/022, F01N 3/035

(54) **DISPOSITIF DE FILTRATION DES GAZ D ECHAPPEMENT POUR MOTEUR DIESEL COMPRENANT UN SUPPORT DE CATALYSEUR INTEGRE DANS LE MOYEN DE FILTRATION**
FILTERVORRICHTUNG FÜR DIESELMOTOREN ABGASE MIT EINEM INTEGRIERTEN KATALYTISCHEN TRÄGERMATERIAL
DEVICE FOR FILTERING EXHAUST GASES OF A DIESEL ENGINE COMPRISING A CATALYST SUPPORT INCORPORATED IN THE FILTERING MEANS

(30) Priorité: 27.11.2001 FR 0115296
(43) Date de publication de la demande: 25.08.2004
(73) Titulaire: CRMT, 69570 Dardilly (FR)
(72) Inventeur: FAYARD, Jean-Claude, F-69003 Lyon (FR)
(74) Mandataire: Schouller, Jean-Philippe
(86) Numéro de dépôt international: PCT/FR2002/004057
(87) Numéro de publication internationale: WO 2003/048552

(56) Documents cités:
- EP-A- 0 742 352
- WO-A-01/12320
- DE-A- 19 933 442
- US-A- 4 866 932
- US-A- 5 839 273

## Description

La présente invention concerne de façon générale le domaine des filtres à particules et de façon plus particulière, un dispositif de filtration de gaz d'échappement pour moteur diesel.

De façon plus particulière, la présente invention concerne un dispositif de filtration des gaz d'échappement pour moteur diesel comportant en outre un moyen de filtration desdits gaz dans lequel est disposé un moyen de catalyse.

La réduction des émissions polluantes produites par les moteurs à explosion et en particulier les moteurs diesels, est l'objectif que se sont fixés les pouvoirs publics. A cette fin, l'instauration de normes toujours plus draconiennes impose aux constructeurs automobiles de développer des moteurs présentant des consommations de plus en plus réduites et surtout optimisées afin de limiter la libération de particules imbrûlées; mais également des dispositifs de filtration de gaz d'échappement, permettant de retenir les particules polluantes.

Ainsi, afin de réduire l'émission de gaz polluants imbrûlés et de particules solides, les constructeurs automobiles ont mis au point les pots catalytiques ou catalyseurs, généralement constitués d'une enveloppe en acier inoxydable, d'un isolant thermique et d'un support en nid d'abeille imprégné de métaux précieux tels que le platine ou le rhodium.

Ces pots catalytiques comportent désormais un filtre à particules qui a pour fonction de retenir les particules de carbone, constituant les particules imbrûlées émises par le moteur. Toutefois, une difficulté supplémentaire est apparue lors de l'utilisation de tels filtres, qui consiste à trouver des solutions pour que ces particules de carbone piégées sur le filtre puissent brûler ou s'oxyder au fur et à mesure qu'elles se déposent afin d'éviter le colmatage de ce dernier.

Toutes les techniques de filtres à particules pour, moteur diesel, utilisées aujourd'hui ou en cours de développement, sont toutes confrontées au problème majeur de la combustion incomplète des particules retenues sur le médiat filtrant. En effet pour des conditions d'utilisations urbaines la température des gaz d'échappement atteinte est insuffisante pour provoquer cette combustion et limiter significativement le colmatage du filtre.

Sans assistance chimique, les particules de carbone issues de la combustion du gazole ne commencent à s'oxyder significativement qu'au-dessus de 500°C, ces températures n'étant pratiquement jamais atteintes dans les conditions de roulage urbain, il est donc nécessaire de faire appel à un procédé chimique pour les éliminer.

A défaut d'assistance chimique, il s'ensuit un colmatage du filtre qui, outre le fait qu'il entraîne une perte de charge au niveau du moteur et donc un mauvais fonctionnement de celui-ci, provoque des réactions violentes liées à la concentration excessive de particules de carbone dans le filtre. Ces réactions consistent en la combustion, trop rapide d'une grande masse de particules, ce qui conduit généralement à une destruction du filtre par choc thermique, les températures obtenues étant très élevées localement.

Pour obtenir l'oxydation de ces particules, plusieurs systèmes sont déjà utilisés.

Ainsi, certains systèmes proposent de disposer en amont du filtre à particules, un moyen de catalyse d'oxydation permettant la transformation du monoxyde d'azote NO, contenu dans les gaz d'échappement, en dioxyde d'azote NO₂ à partir de 250°C. Cette technique, appelée "Continuous Regenerating Trap" (C.R.T.), allie les effets du filtre à particules et du catalyseur d'oxydation du NO.

Ce moyen est constitué par un support catalytique sur lequel est fixé le catalyseur, qui est généralement un métal précieux tels que le platine ou le rhodium. Le NO₂ produit par l'action de ce dernier possède la propriété d'oxyder les particules de carbone à partir de 250°C. Toutefois le bon fonctionnement du filtre dépend de la température moyenne atteinte et du rapport de particules émises par rapport au NO₂ formé.

Il existe un moyen similaire constituant une variante de ce dernier, dans lequel le catalyseur est fixé directement sur le filtre à particules.

Ainsi, le document WO-A-01/12320 décrit un dispositif de filtration des gaz d'échappement comportant une structure en nid d'abeille avec une pluralité de canaux, dans laquelle une partie des canaux est bouchée à l'extrémité supérieure, l'autre partie des canaux étant bouchée à l'extrémité inférieure. Les canaux bouchés à l'extrémité inférieure présentent à leur extrémité supérieure un revêtement définissant une zone imperméable au gaz, ledit revêtement portant un catalyseur d'oxydation. La paroi des canaux située en aval du revêtement est perméable aux gaz, permettant ainsi le piégeage des poussières contenues dans les gaz d'échappement, sur cette paroi. Le catalyseur d'oxydation permet de générer à partir du NO contenu dans les gaz d'échappement une quantité suffisante de NO₂ pour brûler de façon continue les poussières piégées sur le filtre, à une température inférieure à 400°C.

Ce dispositif présente des inconvénients majeurs. Tout d'abord, la surface filtrante est réduite du fait de la présence du revêtement portant le catalyseur d'oxydation, ce qui limite donc la capacité de filtration. Par ailleurs, le revêtement portant le catalyseur d'oxydation étant en contact direct avec le filtre, il est soumis aux variations de température de ce dernier. Il s'ensuit donc que le revêtement peut subir des détériorations dues à ces variations de température.

Par ailleurs, seuls certains matériaux constituant le filtre à particules sont aptes à fixer directement les catalyseurs métalliques. C'est le cas notamment de la cordiérite. Or, des matériaux de ce type sont connus pour être particulièrement sensibles à l'augmentation de température. Il apparaît alors que des augmentations brutales de température qui peuvent se produire dans le filtre à particules lorsqu'il est colmaté, sont susceptibles d'entraîner une détérioration irréversible de ce dernier. Il est alors nécessaire de remplacer le filtre à particules et plus généralement le dispositif d'échappement, ce qui représente un coût tout à fait rédhibitoire.

Les autres types de filtres à particules actuellement sur le marché sont en carbure de silicium. Ce matériau a comme principaux avantages d'être un bon conducteur de la chaleur, de résister aux températures élevées et de posséder une capacité de filtration deux fois plus importante que la cordiérite. Par contre, le carbure de silicium ne possède pas de propriétés d'accrochage, ce qui empêche tout dépôt de catalyseur à sa surface.

Ainsi, s'il semble techniquement intéressant de disposer le catalyseur au niveau du filtre à particules, afin d'optimiser l'oxydation des particules de carbone, il apparaît que les techniques existantes ne permettent pas combiner cette disposition du catalyseur avec des propriétés optimisées de résistance à la chaleur et de filtration.

Un autre problème qui se pose aux constructeurs automobiles, est la nécessité de traiter les gaz polluants émis par les moteurs et notamment les oxydes d'azotes (NOx). Si une partie de ces gaz polluants est utilisée pour oxyder les particules de carbone tel que décrit ci-dessus, la majeure partie est rejetée dans l'atmosphère.

Des systèmes permettant de retraiter ces oxydes d'azote ont été mis au point. Ces systèmes appelés "DéNOx" consistent en l'utilisation de catalyseurs ayant pour fonction de réduire les oxydes d'azote, contenus dans les gaz d'échappement, en azote. Ces systèmes sont indépendants des systèmes permettant de brûler les particules de carbone, déposées sur les filtres à particules. En conséquence, lorsqu'il est prévu un dispositif d'échappement ayant pour fonction de filtrer les particules de carbone, de les brûler afin de régénérer le filtre à particules et de traiter les gaz polluants tels que les oxydes d'azote, il se pose indubitablement un problème d'encombrement inhérent à la présence dans le dispositif des différents systèmes. Le dispositif d'échappement devient alors très volumineux, ce qui constitue un problème important, quand on sait qu'un tel dispositif est généralement placé sous le véhicule.

Un autre enjeu majeur du développement de dispositif d'échappement antipollution, est donc de réduire l'encombrement des différents systèmes de traitement ou de coupler plusieurs systèmes afin de gagner de la place.

Dans un tel contexte technique, la présente invention a comme objectif principal de proposer un dispositif de filtration disposant d'un moyen de filtration qui comprend en son sein au moins un moyen de catalyse, permettant ainsi d'optimiser la réaction de catalyse.

Un autre objectif de la présente invention est de proposer un dispositif de filtration dans lequel le moyen de catalyse est disposé dans un moyen de filtration qui n'est pas apte à fixer ledit moyen de catalyse.

Encore un autre objectif de la présente invention est de fournir un dispositif de filtration présentant un encombrement restreint.

Enfin, un dernier objectif la présente invention est de fournir un dispositif de filtration susceptible de combiner un moyen de catalyse permettant de brûler les particules de carbone et un moyen de catalyse permettant de réduire les oxydes d'azote, et ceci sans augmentation de l'encombrement.

Ces objectifs, parmi d'autres, sont atteints par la présente invention qui concerne un dispositif de filtration selon la revendication 1 annexée.

Par ruban, on entend un élément de section parallélépipédique de faible épaisseur, plat ou ondulé, ayant une largeur légèrement inférieure à la section de la cavité.

La présente invention sera mieux comprise à la lecture de la description qui suit, faite en référence aux dessins qui représentent, de façon nullement limitative, un exemple de réalisation du dispositif de filtration selon l'invention et dans lesquels :
**La figure 1** représente une vue générale schématique du système comprenant le dispositif de filtration selon un mode préféré de réalisation de l'invention.
**La figure 2** représente une vue en coupe longitudinale du dispositif de filtration selon l'invention.
**La figure 3** représente une vue en perspective d'un ensemble d'unités filtrantes.
**Les figure 4a** et **4b** représentent respectivement une vue de dessous et une vue en coupe longitudinale selon l'axe IV-IV d'un ensemble d'unités filtrantes.
**La figure 5** représente une vue de dessus en détail d'une unité filtrante.
**La figure 6** représente une vue en coupe longitudinale selon l'axe V-V d'une unité filtrante représentée à la figure 5, selon un premier mode de réalisation.
**La figure 7** représente une vue en coupe longitudinale d'une unité filtrante, selon un second mode de réalisation.

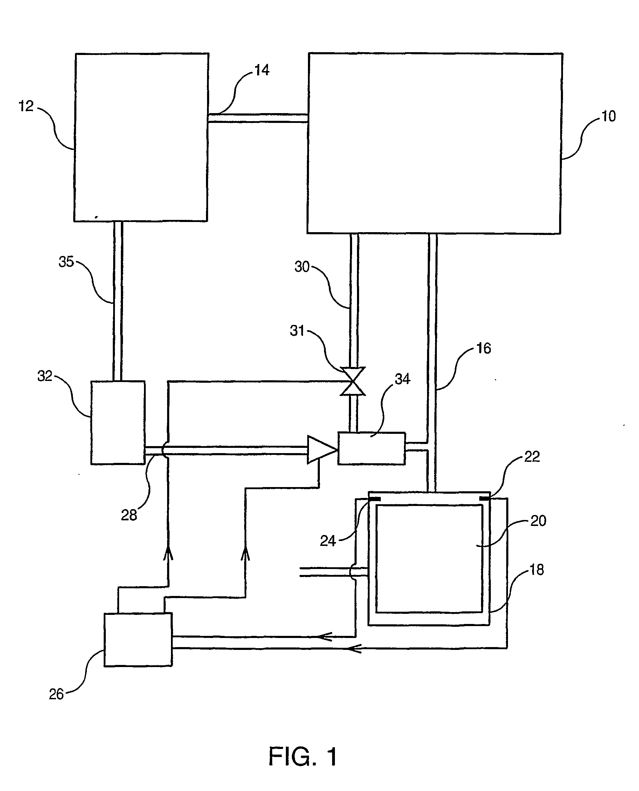

Le système qui permet la mise en oeuvre du dispositif de filtration selon l'invention est représenté de façon schématique à la figure 1, selon un mode préférentiel. Dans ce système, collaborent différents éléments mécaniques du véhicule, qui font ou non partie du dispositif de filtration.

Ainsi, un moteur diesel 10, alimenté en carburant par un réservoir principal 12 via un système d'alimentation 14, produit en fonctionnement des gaz d'échappement. Ces gaz sont récupérés par le biais d'un collecteur (non représenté) à la sortie du moteur et sont évacués par l'intermédiaire d'un conduit d'évacuation 16. Ce conduit rejoint une enceinte 18 contenant un moyen de filtration 20 dans lequel est disposé le moyen de catalyse (non représenté). Sont également placées au niveau de l'enceinte 18, une sonde de température 22 et une sonde de pression 24. Ces sondes ont pour fonction de mesurer la température et la pression au voisinage du moyen de filtration. Les données relatives à ces mesures sont transmises à un boîtier électronique de commande 26 et sont analysées par ce dernier.

Le boîtier électronique de commande est relié à deux conduits 28 et 30 et déclenche leur ouverture. Le conduit 28 relie un réservoir secondaire 32 à une chambre d'injection 34. Ce réservoir secondaire 32 alimente la chambre d'injection 34 en gazole. Lui-même est alimenté par le réservoir principal 12 par le biais d'un système de tuyauterie 35.

Le conduit 30 relie, quant à lui, le moteur 10 à la chambre d'injection 34. Il permet au moteur 10 d'alimenter la chambre d'injection 34 en air comprimé.

L'ouverture des conduits 28 et 30 se fait par l'intermédiaire de l'injecteur 29 et de l'électrovanne 31, commandées électriquement par le boîtier électronique de commande.

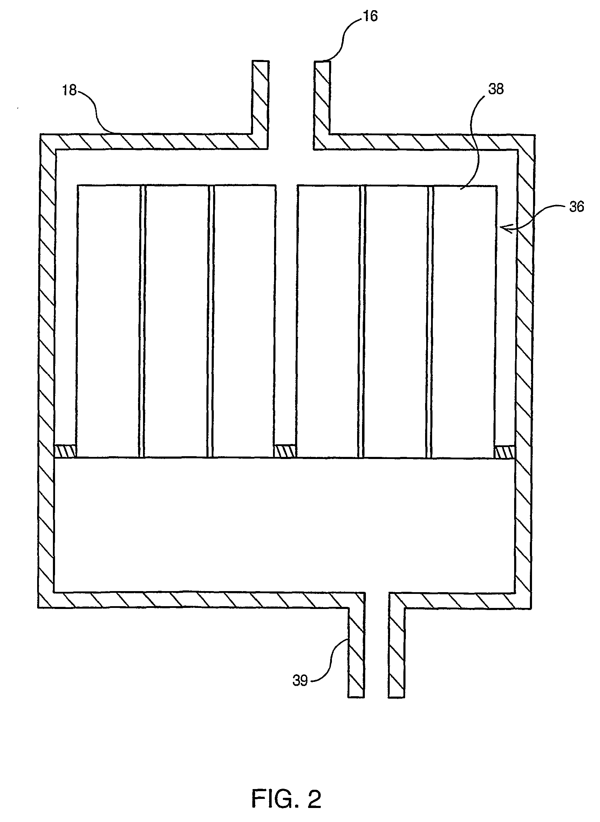

Une vue détaillée en coupe longitudinale de l'enceinte 18 est représentée sur la figure 2.

Dans l'enceinte 18, sont disposées, côte à côte, deux ensembles 36 d'unités filtrantes 38. L'enceinte comporte le conduit d'entrée 16 et un conduit de sortie 39 des gaz d'échappement à l'opposé. Les unités filtrantes étant disposées de manière que les gaz d'échappement à l'entrée baignent ces dernières intégralement comme montré sur la figure, constituant ainsi une chambre de rétention de ces gaz.

Cette disposition permet aux gaz d'échappement de venir chauffer uniformément toutes les unités filtrantes. Cette caractéristique remarquable permet de maintenir ces dernières à une température bien supérieure à la température habituelle et permet ainsi d'atteindre plus facilement la température de combustion ou d'oxydation en présence du catalyseur de combustion utilisé.

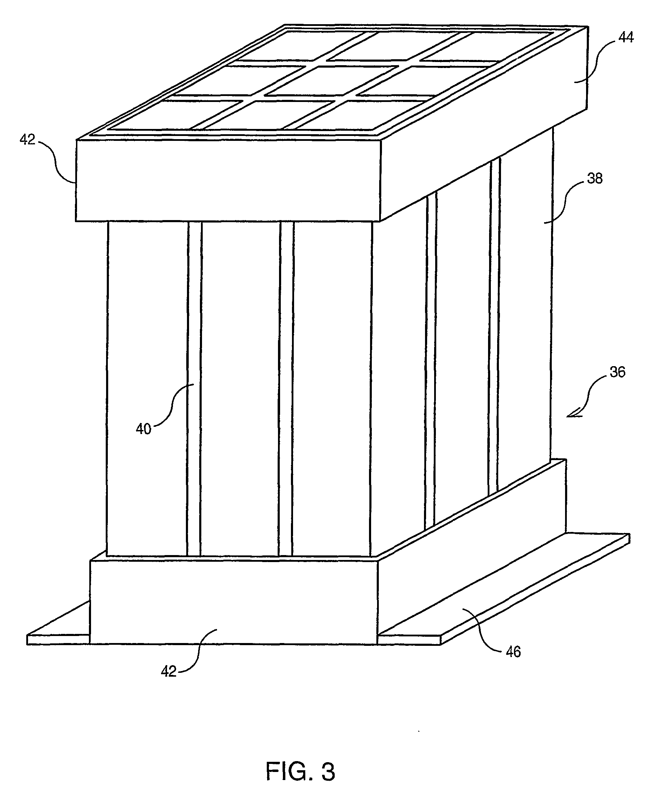

Comme on peut le voir sur la figure 3, représentant une vue en perspective d'un ensemble 36 de 9 unités filtrantes 38, ces dernières sont juxtaposées les unes à côté des autres de telle manière qu'il subsiste un espace 40 entre elles, permettant aux gaz de circuler librement entre elles sur la majorité de leur surface.

Les unités filtrantes sont solidarisées par deux supports : un support inférieur 42 et un support supérieur 44. Le support inférieur 42 dispose avantageusement de deux cornières 46 permettant la fixation de l'ensemble 48 dans l'enceinte 18 du dispositif de filtration. Ces supports sont avantageusement en métal.

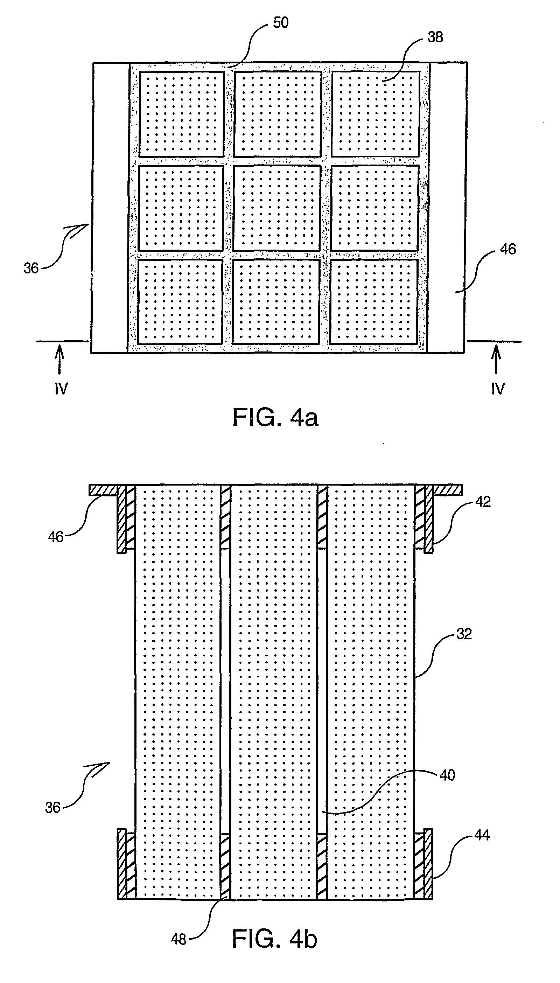

L'observation des figures 4a et 4b, représentant respectivement une vue de dessous et une coupe longitudinale selon l'axe IV-IV d'un ensemble 36 d'unités filtrantes 38, identique à celui de la figure 3, permet de constater que les unités filtrantes 38 sont, en fait, séparées à leurs extrémités supérieures et inférieures par des joints séparateurs 48 et 50. Ces joints présentent une résistance thermique importante ainsi qu'une bonne compressibilité, autorisant la dilatation des unités filtrantes. Avantageusement, ces joints peuvent être constitués par une feuille de céramique, préférentiellement du type mica. De tels joints permettent une solidarisation des unités filtrantes sur une faible longueur, tout en assurant un espacement suffisant entre ces dernières. Ils peuvent présenter une épaisseur comprise entre 1 et 4 mm et une hauteur de 10 à 60 mm de manière à laisser le maximum de surface de l'unité filtrante en contact avec les gaz d'échappement qui les baignent. Cet espace permet aux unités filtrantes d'être indépendantes thermiquement et de travailler indépendamment les unes des autres.

Cette disposition est particulièrement avantageuse car, d'une part, elle permet de réduire de façon très importante les contraintes de dilatations thermiques, notamment en cas de combustion brutale de particules retenues, ce qui limite fortement le risque de voir les unités filtrantes se détériorer; d'autre part, la surface disponible pour la transmission de chaleur par les gaz d'échappement est augmentée de façon considérable, ce qui accentue d'autant cette transmission de chaleur.

Selon une variante de l'invention, l'ensemble 36 d'unités filtrantes 28 peut comprendre un seul support. Dans ce cas, ce dernier est disposé préférentiellement à la moitié de la hauteur des unités filtrantes. Avantageusement, l'espacement entre les unités filtrantes se fera par un seul joint séparateur situé également à la moitié de la hauteur des unités filtrantes, au niveau du support. Un tel support et un tel joint pourraient être équivalents à ceux utilisés dans le mode de réalisation décrit aux figures 3, 4a et 4b. L'utilisation de deux cornières identiques aux cornières 46 ou différentes, peut également être envisagée. Selon ce mode de réalisation, les extrémités supérieures et inférieures des unités filtrantes sont libres.

Selon une autre variante de l'invention, un moyen complémentaire de chauffage des unités filtrantes est adjoint. Ce moyen de chauffage est avantageusement constitué par des résistances électriques, de faible diamètre (moins de 1 mm), disposées autour de chacune desdites unités filtrantes 38, ces résistances étant enroulées sur la section parallélépipédique libre des unités filtrantes entre les joints séparateurs supérieurs 48 et inférieurs 50. Un tel moyen de chauffage a pour fonction d'augmenter la température à l'intérieur des unités filtrantes, de façon à faciliter la combustion des particules de carbone.

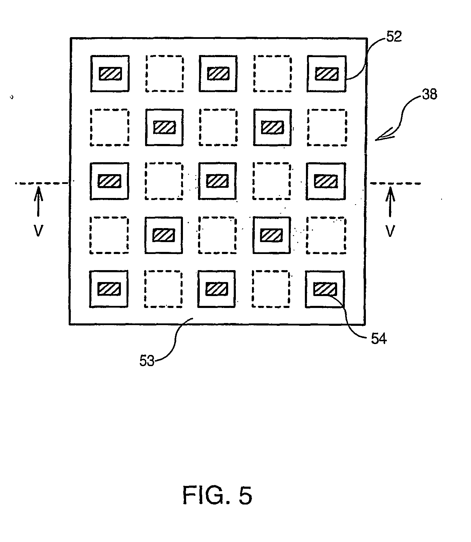

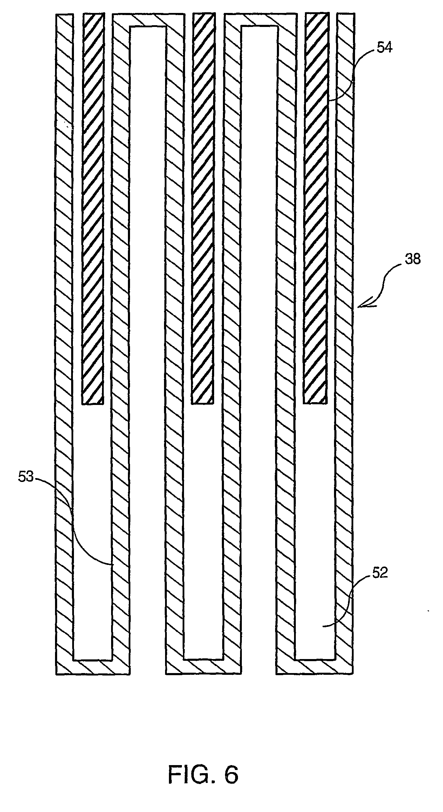

Une unité filtrante 38 est représentée en détail, vue de dessus à la figure 5. La figure 6 représente l'unité filtrante de la figure 5 en coupe longitudinale selon l'axe V-V. Cette unité filtrante est préférentiellement de forme parallélépipédique rectangle à base carrée. De façon avantageuse, les unités filtrantes en carbure de silicium sont de type nid d'abeille. Elles sont constituées d'un ensemble de cavités 52, alternativement obturées à leur extrémité supérieure ou à leur extrémité inférieure, de telle sorte que les gaz d'échappement qui entrent dans une cavité, obturée à son extrémité inférieure, diffusent à travers les parois 53 de la cavité de manière à rejoindre une cavité adjacente, dont l'extrémité inférieure est dégagée. C'est lors de leur diffusion à travers la paroi, qui constitue le médiat filtrant, que les gaz d'échappement sont filtrés. De telles unités filtrantes peuvent être de marque IBIDEN®. Il s'agit d'unités filtrantes à section carrée d'environ 34,5 mm x 34,5 mm et qui peuvent être de différentes longueurs selon l'application qu'on en fait.

Selon un premier mode de réalisation de l'invention représenté sur les figures 5 et 6, des rubans 54 sont disposés à l'entrée des cavités des unités filtrantes, ajourées à leur extrémité supérieure. Ces rubans 54 constituent le support de catalyseur. Ces rubans sont en métal et avantageusement en métal inoxydable, tel que l'acier. Ils portent un revêtement, communément appelé "wash-coat", sur lequel est fixé le catalyseur. Ce revêtement adsorbant peut être constitué de silice et d'alumine. Les dimensions du ruban métalliques sont choisies de manière à ce que ces derniers n'obturent pas la cavité dans laquelle ils se trouvent. Par exemple, ils ont une épaisseur comprise entre 0.05 mm et 0.5 mm et une largeur très légèrement inférieure à la taille de la cavité : 1 mm pour une cavité de 1.2 mm x 1.2 mm. En effet, si la cavité était obturée par le ruban métallique, les gaz d'échappement ne circuleraient pas librement ce qui engendrerait une perte de charge au niveau du moteur. La demanderesse s'est donc efforcée de trouver le compromis idéal entre la nécessité de disposer d'un support de catalyseur présentant une surface suffisante pour porter la quantité efficace de catalyseur, et la nécessité de ne pas entraîner de perte de charge au niveau du moteur. Selon une variante avantageuse de l'invention, les rubans 54 peuvent être ondulés de manière à augmenter la surface active supportant le catalyseur.

Les rubans métalliques sont soutenus par un système non représenté, qui est solidaire de l'ensemble 36. Il peut s'agir par exemple d'une grille métallique disposée contre le nid d'abeille qui permet de maintenir chaque ruban à l'intérieur de leur cavité.

La réalisation du support du catalyseur sous forme de rubans ne constitue qu'une des variantes de réalisation.

Selon la variante représentée sur les figures 5 et 6, le catalyseur fixé sur le les rubans métalliques 54 est le catalyseur de combustion des particules de carbone retenues sur les parois des unités filtrantes, lors du passage des gaz d'échappement. Ce métal est avantageusement un métal précieux. Ce métal peut être le platine, le rhodium ou tout métal équivalent. Ainsi, lorsque les gaz d'échappement chauds, produits par le moteur, arrivent au niveau du dispositif de filtration et viennent lécher le support de catalyseur, le catalyseur présent sur le support active la formation de dioxyde d'azote, qui permet l'oxydation des particules de carbone retenues sur médiat filtrant, constitué par la paroi des cavités des unités filtrantes. La formation de dioxyde d'azote se produisant à l'intérieur des unités filtrantes, à l'endroit même où les particules de carbone sont retenues, l'oxydation de ces dernières s'en trouve donc optimisée.

Dans le cas où la température des gaz d'échappement n'est pas suffisante pour assurer une bonne oxydation des particules de carbone et donc une bonne régénération des unités filtrantes, il est possible d'atteindre la température désirée par une injection de gazole dans le dispositif de filtration.

Pour se faire, la température dans l'enceinte 18 est mesurée, grâce à la sonde 24. La valeur de température θₘ mesurée est recueillie par le boîtier électronique de commande. Le boîtier va comparer cette valeur θₘ à une valeur de référence θᵣ, correspondant à la température à laquelle la combustion du gazole, en présence de catalyseur, se fait de façon complète.

Si la température θₘ mesurée est supérieure ou égale à la valeur de référence θᵣ, le boîtier électronique de commande déclenche l'ouverture de l'électrovanne 31 et de l'injecteur 29. Cette ouverture provoque l'entrée de gazole et d'air comprimé dans la chambre d'injection 34. Dans la chambre d'injection 34, le gazole se mélange à l'air comprimé et le mélange, ainsi constitué, est pulvérisé, sous forme nébulisé dans le conduit d'évacuation des gaz 16. Cette pulvérisation se fait par un orifice aménagé dans la paroi de la chambre d'injection 34, en regard duquel se trouve une buse, fixée à la chambre, permettant d'obtenir un jet nébulisé sous pression. Selon un exemple de réalisation, la chambre d'injection 34 présente une géométrie similaire à celle utilisée sur le pistolet à peinture à air comprimé.

Lorsque la quantité de gazole nécessaire, prédéterminée par le boîtier électronique de commande, a été injectée, l'alimentation en gazole est coupée par fermeture de l'injecteur 29. Seule l'alimentation en air comprimé persiste de telle sorte que ce dernier est pulvérisé dans le conduit 16 en lieu et place du mélange. Cette alimentation prolongée en air comprimé a pour but d'éliminer tout reste de gazole dans la chambre d'injection 34 et le conduit 16.

La capacité du réservoir secondaire 32 est déterminée de façon à ce qu'elle corresponde au volume maximum de gazole nécessaire à la régénération. Ainsi, il ne peut se produire de surconsommation de gazole. De plus, grâce à ce mode de réalisation, la fréquence des cycles de régénération est limitée par le temps nécessaire au remplissage du réservoir secondaire 32, ce qui permet également d'éviter des surconsommations conséquentes en carburant.

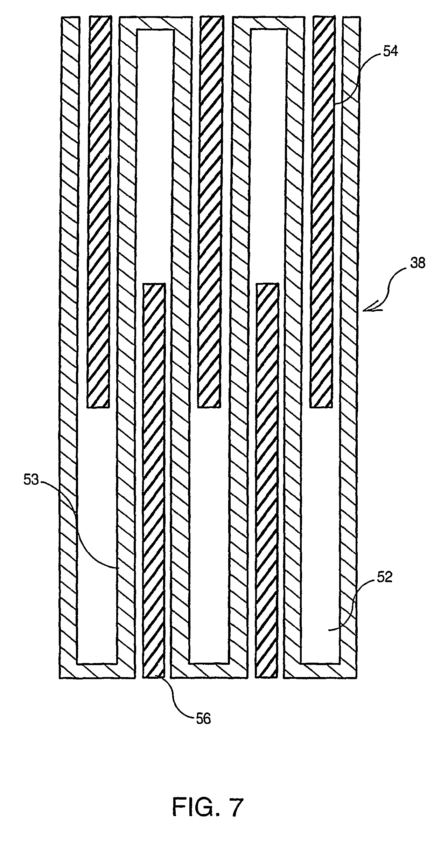

Un second mode de réalisation est représenté à la figure 7. Selon ce mode de réalisation, le dispositif de filtration comprend deux supports de catalyseur. Un premier support, identique à celui utilisé dans le premier mode de réalisation, est constitué par un ensemble de rubans 54, placées en entrée des cavités des unités filtrantes, dont l'extrémité supérieure est ajourée. Un deuxième support est constitué par une deuxième ensemble de rubans 56, disposée en sortie des cavités des unités filtrantes dont l'extrémité inférieure est ajourée. Selon ce mode de réalisation, les deux supports ne portent pas les mêmes catalyseurs.

En effet, si le support constitué des rubans 54 porte un catalyseur permettant d'activer l'oxydation des particules de carbone déposées sur les parois des unités filtrantes, le support constituées des rubans 56 portent préférentiellement un catalyseur de type "déNOx". En effet, la réduction de l'émission des oxydes d'azote constituant également un objectif essentiel dans la réduction des émissions polluantes, la mise en place d'un système de ce type à cet endroit du dispositif de filtration peut être tout à fait avantageuse. La réduction des oxydes d'azote est particulièrement délicate, notamment en terme de température. En effet, cette dernière ne doit pas être trop élevée. Or, il apparaît que la disposition du catalyseur de réduction des oxydes d'azote à la sortie des unités filtrantes permet d'obtenir des résultats très probants, du fait notamment que les gaz d'échappement, lorsqu'ils atteignent cet endroit du dispositif de filtration, ont vu leur température diminuée jusqu'à 250-300°C, température optimale pour la réduction des oxydes d'azote.

Un autre avantage de ce mode de réalisation est que le catalyseur de type "déNOx" requiert une surface importante de contact pour fonctionner de façon optimale. Or, ce mode de réalisation permet d'obtenir la surface de contact nécessaire, sans augmenter l'encombrement du dispositif de filtration.

Selon encore un autre mode de réalisation, les rubans constituant le support de catalyseur sont disposés uniquement en sortie des cavités des unités filtrantes, dont l'extrémité inférieure est ajourée, de façon identique aux rubans 56 représentés sur la figure 7. Selon ce mode de réalisation et de façon identique aux rubans 56, ces rubans portent un catalyseur de type "déNOx".

## Revendications

1. Dispositif de filtration de gaz d'échappement comportant :
• au moins un moyen de catalyse constitué par au moins un support solide portant au moins un catalyseur,
• et un moyen de filtration (20) desdits gaz d'échappement, disposés dans une enceinte réactionnelle (18) dans la trajectoire du flux des gaz d'échappement produits par un moteur (10), le moyen de filtration (20) étant constitué par au moins un ensemble (36) d'au moins une unité filtrante (38) qui comprend une pluralité de cavités (52) formant une structure en nid d'abeille, la paroi (53) desdites cavités ayant la fonction de média filtrant,
ledit dispositif étant **caractérisé en ce que** le moyen de catalyse est disposé au sein du moyen de filtration (20), mais n'est pas en contact avec ce dernier, le support du catalyseur étant constitué par au moins un ruban (54) inséré dans au moins une cavité desdites unités filtrantes (38).

2. Dispositif selon la revendication précédente, **caractérisé en ce que** lorsqu'il comporte un ensemble (36) de plusieurs unités filtrantes (38) et/ou plusieurs ensembles (36) d'une ou plusieurs unités filtrantes (38), lesdites unités filtrantes (38) sont séparées les unes des autres par un joint séparateur (50) rendant lesdites unités filtrantes indépendantes thermiquement.

3. Dispositif selon la revendication 1 ou 2, **caractérisé en ce que** le ruban (54) est en métal inoxydable.

4. Dispositif selon la revendication 1 ou 2, **caractérisé en ce que** le ruban (54) est disposé en amont et/ou en aval du médiat filtrant.

5. Dispositif selon l'une des revendications 1 à 4, **caractérisé en ce que** lesdites unités filtrantes (38) sont en carbure de silicium.

6. Dispositif selon l'une des revendications 1 à 5, **caractérisé en ce que** lesdites unités filtrantes (38) sont sous forme de barreaux, de préférence parallélépipédiques.

7. Dispositif selon la revendication 6, **caractérisé en ce que** les joints séparateurs (50) n'occupe qu'une partie de l'espace interstitiel des unités filtrantes.

8. Dispositif selon l'une des revendications précédentes, **caractérisé en ce que** le catalyseur est un catalyseur de la réaction de combustion des particules de carbone retenues sur le médiat filtrant.

9. Dispositif selon l'une des revendications précédentes, **caractérisé en ce que** le catalyseur est un catalyseur de la réaction de réduction des monoxydes d'azote (NOx) contenus dans les gaz d'échappement.

10. Dispositif selon l'une des revendications précédentes, **caractérisé en ce qu'**il comporte également un moyen d'injection de gazole, en amont de l'enceinte réactionnelle (18).

11. Dispositif selon l'une des revendications précédentes, **caractérisé en ce qu'**il comporte également un moyen de chauffage des unités filtrantes (38), ce moyen de chauffage étant constitué par au moins une résistance électrique, disposée autour de chacune desdites unités filtrantes (38).

12. Dispositif selon l'une des revendications précédentes, **caractérisé en ce que** les unités filtrantes (38) baignent dans une chambre de réception des gaz d'échappement, lesdits gaz d'échappement venant chauffer lesdites unités filtrantes (38).

## Patentansprüche

1. Abgasfiltervorrichtung, die folgendes aufweist:
• mindestens eine Katalyseeinrichtung, welche aus mindestens einem festen Träger besteht, der mindestens einen Katalysator trägt,
• und eine Filtereinrichtung (20) zum Filtern der Abgase, die in einer Reaktionskammer (18) im Strömungsverlauf der von einer Brennkraftmaschine (10) erzeugten Abgase angeordnet sind, wobei die Filtereinrichtung (20) aus mindestens einer Anordnung (36) aus mindestens einer Filtereinheit (38) besteht, welche eine Vielzahl von Hohlräumen (52) aufweist, die eine Wabenstruktur bilden, wobei die Wand (53) der Hohlräume die Funktion eines Filtermediums besitzt,
wobei die Vorrichtung **dadurch gekennzeichnet ist,**
**daß** die Katalyseeinrichtung im Inneren der Filtereinrichtung (20), aber nicht in Kontakt mit dieser angeordnet ist, wobei der Katalysatorträger von mindestens einem Band (54) gebildet ist, das in mindestens einen Hohlraum der Filtereinheiten (38) eingesetzt ist.

2. Vorrichtung nach dem vorhergehenden Anspruch,
**dadurch gekennzeichnet,**
**daß** dann, wenn sie eine Anordnung (36) von mehreren Filtereinheiten (38) und/oder mehrere Anordnungen (36) von einer oder mehreren Filtereinheiten (38) aufweist, die Filtereinheiten (38) durch eine Trennungsdichtung (50) voneinander getrennt sind, welche die Filtereinheiten thermisch unabhängig voneinander macht.

3. Vorrichtung nach Anspruch 1 oder 2,
**dadurch gekennzeichnet,**
**daß** das Band (54) aus nicht-oxidierbarem Metall besteht.

4. Vorrichtung nach Anspruch 1 oder 2,
**dadurch gekennzeichnet,**
**daß** das Band (54) stromaufwärts und/oder stromabwärts von dem Filtermedium angeordnet ist.

5. Vorrichtung nach einem der Ansprüche 1 bis 4,
**dadurch gekennzeichnet,**
**daß** die Filtereinheiten (38) aus Siliciumcarbid bestehen.

6. Vorrichtung nach einem der Ansprüche 1 bis 5,
**dadurch gekennzeichnet,**
**daß** die Filtereinheiten (38) in Form von Barren, bevorzugt von parallelepipedförmigen Barren, vorliegen.

7. Vorrichtung nach Anspruch 6,
**dadurch gekennzeichnet,**
**daß** die Trennungsdichtungen (50) nur einen Teil des Zwischenraumes zwischen den Filtereinheiten einnehmen.

8. Vorrichtung nach einem der vorhergehenden Ansprüche,
**dadurch gekennzeichnet,**
**daß** der Katalysator ein Katalysator für die Verbrennungsreaktion der auf dem Filtermedium zurückgehaltenen Kohlenstoffpartikel ist.

9. Vorrichtung nach einem der vorhergehenden Ansprüche,
**dadurch gekennzeichnet,**
**daß** der Katalysator ein Katalysator für die Reduktionsreaktion der in den Abgasen enthaltenen Stickstoffmonoxide (NOx) ist.

10. Vorrichtung nach einem der vorhergehenden Ansprüche,
**dadurch gekennzeichnet,**
**daß** sie ferner eine Einrichtung zum Einspritzen von Dieselkraftstoff stromaufwärts von der Reaktionskammer (18) aufweist.

11. Vorrichtung nach einem der vorhergehenden Ansprüche,
**dadurch gekennzeichnet,**
**daß** sie ferner eine Einrichtung zum Aufheizen der Filtereinheiten (38) aufweist,
wobei diese Heizeinrichtung aus mindestens einem elektrischen Widerstand besteht, der um jede der Filtereinheiten (38) herum angeordnet ist.

12. Vorrichtung nach einem der vorhergehenden Ansprüche,
**dadurch gekennzeichnet,**
**daß** die Filtereinheiten (38) in einer Kammer zum Aufnehmen der Abgase umspült werden, wobei die Abgase die Filtereinheiten (38) aufheizen.

## Claims

1. An exhaust-gas filtration device, comprising:
- at least one catalysis means formed by at least one solid support bearing at least one catalyst,
- and a filtration means (20) for said exhaust gases,
which are arranged in a reaction chamber (18) in the path of flow of the exhaust gases produced by an engine (10), the filtration means (20) being formed by at least one assembly (36) consisting of at least one filtering unit (38) which comprises a plurality of cavities (52) forming a honeycomb structure, the wall (53) of said cavities having the function of a filtering medium,
said device being **characterised in that** the catalysis means is arranged within the filtration means (20), but is not in contact with the latter, the catalyst support consisting of at least one strip (54) inserted into at least one cavity of said filtering units (38).

2. A device according to the preceding claim, **characterised in that** when it comprises an assembly (36) of several filtering units (38) and/or several assemblies (36) of one or more filtering units (38), said filtering units (38) are separated from each other by a separating joint (50) rendering said filtering units thermally independent.

3. A device according to Claim 1 or 2, **characterised in that** the strip (54) is made of corrosion-resistant metal.

4. A device according to Claim 1 or 2, **characterised in that** the strip (54) is arranged upstream and/or downstream of the filtering medium.

5. A device according to one of Claims 1 to 4, **characterised in that** said filtering units (38) are made of silicon carbide.

6. A device according to one of Claims 1 to 5, **characterised in that** said filtering units (38) are in the form of bars, preferably parallelepipdal ones.

7. A device according to Claim 6, **characterised in that** the separating joints (50) occupy only part of the interstitial space of the filtering units.

8. A device according to one of the preceding claims, **characterised in that** the catalyst is a catalyst of the combustion reaction of the carbon particles retained on the filtering medium.

9. A device according to one of the preceding claims, **characterised in that** the catalyst is a catalyst of the reduction reaction of the nitrogen monoxides (NOₓ) contained in the exhaust gases.

10. A device according to one of the preceding claims, **characterised in that** it also comprises a diesel fuel injection means, upstream of the reaction chamber (18).

11. A device according to one of the preceding claims, **characterised in that** it also comprises a means for heating the filtering units (38), this heating means being formed of at least one electrical resistor, arranged around each of said filtering units (38).

12. A device according to one of the preceding claims, **characterised in that** the filtering units (38) are immersed in a chamber for receiving the exhaust gases, said exhaust gases heating said filtering units (38).
